# FASCICULE DE BREVET EUROPEEN

(11) **EP 3 710 716 B1**
(45) Date de publication et mention de la délivrance du brevet: **07.05.2025**
(21) Numéro de dépôt: 18819321.3
(22) Date de dépôt: 15.11.2018
(51) Int. Cl.: F16C 33/12, F16C 33/10, F16C 17/02

(54) **BAGUE AUTOLUBRIFIANTE POUR PALIER FLUIDE ET PROCEDE DE FABRICATION D'UNE TELLE BAGUE**
SELBSTSCHMIERENDER RING FÜR FLUIDLAGER UND VERFAHREN ZUR HERSTELLUNG EINES SOLCHEN RINGS
SELF-LUBRICATING RING FOR FLUID BEARING AND METHOD FOR MANUFACTURING SUCH A RING

(30) Priorité: 15.11.2017 FR 1760746
(43) Date de publication de la demande: 23.09.2020
(73) Titulaire: ArianeGroup SAS, 78130 Les Mureaux (FR)
(72) Inventeur: CHEMMACHERY, Jaison, 60650 Ons-En-Bray (FR); OHIER, Dominique, 27600 Saint Aubin Sur Gaillon (FR)
(74) Mandataire: Cabinet Beau de Loménie
(86) Numéro de dépôt international: PCT/FR2018/052853
(87) Numéro de publication internationale: WO 2019/097171

(56) Documents cités:
- WO-A1-2017/022505
- FR-A- 1 153 469
- FR-A1- 2 208 006
- GB-A- 2 363 433
- US-A1- 2003 111 511
- US-A1- 2017 138 396
- US-A1- 2018 223 902

## Description

### DOMAINE DE L'INVENTION

Le présent exposé concerne le domaine des paliers fluides, et plus particulièrement un procédé de fabrication d'une bague autolubrifiante pour palier fluide ainsi qu'une bague autolubrifiante pour un palier fluide.

### ARRIÈRE-PLAN TECHNOLOGIQUE

Les paliers fluides sont connus comme alternative aux roulements à billes, dans de nombreuses applications, pour assurer la suspension d'une partie tournante, telle qu'un arbre, par rapport à un carter fixe. Les paliers fluides possèdent généralement une bague montée coaxialement autour d'un arbre et séparée de cet arbre par un film fluide. Leurs avantages sont nombreux et comprennent notamment une faible usure lors de l'utilisation, grâce à l'absence de contact entre la bague et l'arbre en régime stationnaire.

Toutefois, en régime transitoire, la bague et l'arbre peuvent entrer en contact, ce qui nécessite une lubrification appropriée pour diminuer leur usure.

A cette fin, il a été proposé des bagues dites autolubrifiantes, comprenant un revêtement poreux imprégné, déposé sur un substrat ou « dos ». Le substrat est classiquement en acier inoxydable ; le document US 2017/138396 décrit d'ailleurs un élément de palier dont le substrat peut être en alliage de fer et le revêtement en polymère. Toutefois, dans les organes soumis à de fortes variations de températures, tels que des turbopompes de moteur-fusée à ergols cryogéniques, l'acier inoxydable présente une dilatation différentielle importante par rapport aux alliages plus complexes généralement utilisés dans ces organes. Cela conduit à un risque de défrettage ou de serrage de la bague et, consécutivement, à son démontage intempestif ou sa plastification.

Les procédés connus pour la réalisation de ce type de bague ne permettent pas de modifier le substrat de manière satisfaisante pour résoudre ce problème. Il existe donc un besoin pour un nouveau type de procédé de fabrication d'une bague autolubrifiante pour palier fluide, et pour un nouveau type de bague autolubrifiante pour palier fluide.

### PRÉSENTATION DE L'INVENTION

A cet effet, le présent exposé concerne un procédé de fabrication d'une bague autolubrifiante pour palier fluide selon la revendication 1.

Une bague autolubrifiante est une bague comprenant un revêtement autolubrifiant. Au sens du présent exposé, les alliages incluent les métaux. Certains alliages ont la faculté de s'auto-protéger par la création naturelle, à leur surface, d'une fine couche d'oxydes, étanche et compacte. Une telle couche est un exemple de couche passive, ou couche de passivation. Selon un autre exemple, une couche passive peut résulter d'un traitement de passivation appliqué activement à l'alliage. Dans tous les cas, le retrait de la couche passive permet de mettre à nu au moins localement le cœur du substrat, ayant une composition relativement pauvre en oxydes.

En effet, les inventeurs ont réalisé que contrairement à l'acier inoxydable, les substrats en alliage présentant une couche passive fortement résistante chimiquement offrent une mauvaise adhérence pour le dépôt d'un revêtement autolubrifiant. Ainsi, il n'était pas possible de remplacer simplement l'acier inoxydable des bagues de l'état de la technique par un alliage passif. Le présent procédé, grâce au retrait de la couche passive et au dépôt d'une couche d'ancrage, permet d'assurer une adhérence suffisante entre le substrat en alliage et le revêtement autolubrifiant. En outre, grâce au fait que le substrat peut être choisi dans un alliage proche ou identique à celui utilisé dans les organes concernés, les problèmes de dilatation différentielle peuvent être significativement réduits. On comprend que le dépôt d'une couche d'ancrage est une étape active au cours de laquelle une couche d'ancrage est volontairement déposée sur la surface dépassivée.

Dans certains modes de réalisation, le retrait de la couche passive comprend un sablage du substrat. Le sablage permet non seulement de détruire et d'évacuer la couche passive, par exemple les oxydes formés naturellement à la surface du substrat, mais aussi de créer sur le substrat une rugosité permettant l'ancrage mécanique de la couche d'ancrage sur le substrat. En outre, selon la composition du substrat, le sablage peut être plus efficace qu'un retrait chimique auquel les oxydes résisteraient.

Dans certains modes de réalisation, le dépôt de la couche d'ancrage est réalisé par voie électrolytique. La voie électrolytique est relativement peu couteuse et favorise l'interdiffusion des matériaux de la couche d'ancrage et du substrat, ce qui aboutit également à un meilleur ancrage.

Dans certains modes de réalisation, l'épaisseur de la couche d'ancrage est comprise entre 2 et 20 microns, de préférence entre 5 et 15 microns, de préférence encore entre 8 et 12 microns. Par épaisseur de la couche d'ancrage, on désigne l'épaisseur moyenne de la couche d'ancrage, mesurée perpendiculairement à la surface dépassivée. Dans ces modes de réalisation, l'épaisseur garantit une continuité de couche suffisante pour protéger le substrat de manière efficace avant de poursuivre la fabrication. Une épaisseur inférieure risquerait de laisser des discontinuités aboutissant à la repassivation du substrat, tandis qu'une épaisseur supérieure augmenterait le coût de mise en œuvre du procédé.

Dans certains modes de réalisation, le dépôt du revêtement autolubrifiant comprend un frittage. Le frittage, typiquement d'une poudre, permet de créer une couche poreuse qui peut ensuite être imprégnée avec un matériau apportant le caractère autolubrifiant du revêtement.

Dans certains modes de réalisation, la composition du substrat est la suivante, exprimée en pourcentages massiques : 20,0 à 23,0% de Cr ; au maximum 5,0% de Fe ; 8,0 à 10,0% de Mo ; 3,15 à 4,15% de Nb ; au maximum 1,0% de Co ; au maximum 0,50% de Mn ; au maximum 0,40% de Al ; au maximum 0,40% de Ti ; au maximum 0,50% de Si ; au maximum 0,10% de C ; au maximum 0,015% de S ; au maximum 0,015% de P ; la balance étant Ni. Un tel alliage est connu sous le nom commercial « Inconel 625 » ou selon les appellations N06625 (norme UNS), NI-PH3601 (normale AECMA) ou NC22DNb (norme AFNOR). Un tel alliage peut comprendre des impuretés inévitables.

Dans certains modes de réalisation, la couche d'ancrage est faite de cuivre. Cela signifie que la couche d'ancrage consiste en l'élément chimique cuivre, aux impuretés inévitables près. A tout le moins, la couche d'ancrage peut comprendre, en masse, au moins 70% de cuivre, de préférence au moins 90% de cuivre, de préférence au moins 95% de cuivre. Le cuivre facilite notamment le dépôt d'un revêtement autolubrifiant comprenant du bronze. D'autres matériaux peuvent être utilisés pour la couche d'ancrage, par exemple des alliages à base cuivre (i.e. bronze ou cuivre-zinc) ou du nickel, notamment si le substrat est un alliage à base nickel. En tout état de cause, l'homme du métier peut choisir un matériau apte à permettre l'interdiffusion entre la couche d'ancrage et le revêtement autolubrifiant pour améliorer son ancrage.

Dans certains modes de réalisation, le procédé comprend une étape de mise en forme de la bague. Ainsi, dans certains modes de réalisation, le substrat est enroulé pour former la bague. Le substrat peut être enroulé avec la couche d'ancrage et le revêtement autolubrifiant déposés dessus. Le substrat est généralement enroulé avec le revêtement autolubrifiant à l'intérieur, mais il est alternativement possible de l'enrouler avec le revêtement autolubrifiant à l'extérieur. Le substrat peut être enroulé par formage sous une presse.

Dans certains modes de réalisation, le substrat est en alliage à base nickel. Un alliage à base nickel est un alliage comprenant plus de nickel que n'importe quel autre élément chimique, de préférence au moins 50% de nickel. Les alliages à base nickel sont couramment utilisés dans les organes soumis à de fortes variations de température et forment relativement rapidement, à leur surface, une couche passive. L'application du procédé précédemment décrit trouve donc une application particulièrement intéressante dans ces modes de réalisation.

Le présent exposé concerne également une bague autolubrifiante pour palier fluide selon la revendication 13. La bague peut être réalisée par le procédé précédemment décrit et présenter tout ou partie des caractéristiques résultant des différents modes de réalisation du procédé tels que précédemment décrits. En particulier, le fait que la couche d'ancrage soit ancrée sur le substrat peut être rendu possible par retrait de la couche passive du substrat.

Une telle bague présente une meilleure tenue dans son utilisation dans des organes en alliages, notamment en alliages à base nickel.

### BRÈVE DESCRIPTION DES DESSINS

L'invention et ses avantages seront mieux compris à la lecture de la description détaillée qui suit, de modes de réalisation de l'invention donnés à titre d'exemples non limitatifs. Cette description se réfère aux dessins annexés, sur lesquels :
- les figures 1A, 1B, 1C, 1D, 1E représentent, en coupe schématique, des étapes d'un procédé de fabrication d'une bague autolubrifiante pour palier fluide selon un mode de réalisation ;
- la figure 2 représente, en coupe schématique, une bague autolubrifiante pour palier fluide selon un mode de réalisation.

### DESCRIPTION DÉTAILLÉE DE L'INVENTION

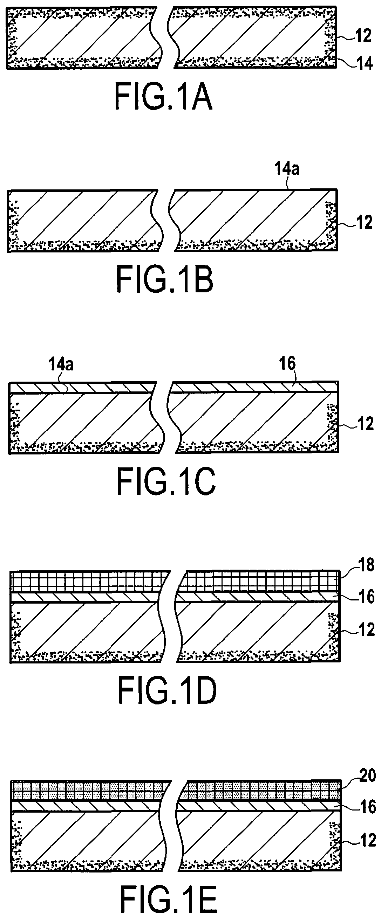

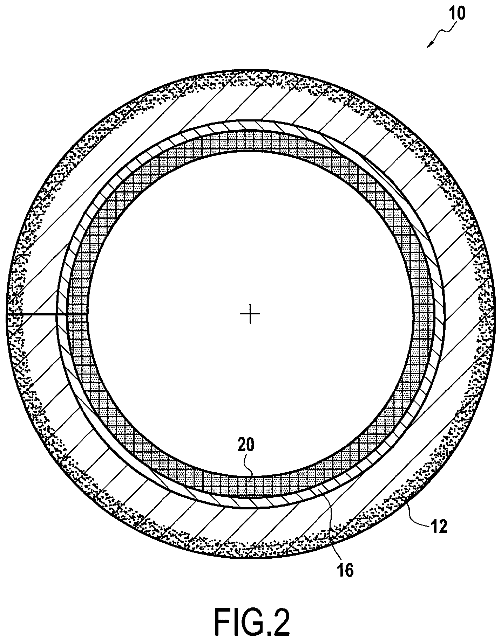

Un procédé de fabrication d'une bague autolubrifiante pour palier fluide, selon un mode de réalisation, va être décrit en référence aux figures 1A-1E et 2.

Comme illustré sur la figure 1A, on fournit tout d'abord un substrat 12 en alliage présentant une couche passive 14. En l'espèce, le substrat 12 est en alliage à base nickel, plus précisément en Inconel 625, dont la composition a été donnée ci-avant. La couche passive 14 est ici une couche superficielle, présente à la périphérie du substrat 12. Cette couche passive 14 résulte en l'espèce de l'oxydation naturelle du substrat 12.

On retire, au moins en partie, la couche passive 14. Dans le présent mode de réalisation, ce retrait est effectué par sablage, éventuellement précédé d'un dégraissage du substrat 12. Les paramètres du sablage peuvent être choisis par l'homme du métier en fonction de l'épaisseur et de la nature des couches d'oxydes formées en surface. Comme illustré sur la figure 1B, on retire la couche passive 14 sur une face du substrat 12, ici la face supérieure. Cela permet d'exposer une surface dépassivée 14a du substrat 12. En outre, grâce au sablage, la surface dépassivée 14a acquiert une rugosité qui peut être supérieure ou égale à la rugosité de la surface avant retrait de la couche passive.

Après le retrait de la couche passive 14, on dépose une couche d'ancrage 16 sur la surface dépassivée 14a. Ce dépôt peut être réalisé directement après le retrait de la couche passive 14, sans attendre, de façon à ne pas permettre à une couche passive de se reformer naturellement. Cette étape est représentée sur la figure 1C. Dans ce mode de réalisation, la couche d'ancrage 16 est en cuivre. Par ailleurs, la couche d'ancrage 16 est ici déposée par voie électrolytique, et, dans cet exemple, sur toute la surface dépassivée 14a. Ainsi, pour ce mode de réalisation, on parle de cuivrage électrolytique. Alternativement, la couche d'ancrage pourrait également être déposée par d'autres voies telles que le dépôt physique en phase vapeur. Par ailleurs, la couche d'ancrage 16 pourrait n'être déposée que sur certaines zones de la surface dépassivée 14a, typiquement via un masquage.

Le dépôt électrolytique est connu en soi par l'homme du métier. Les paramètres du dépôt sont déterminés par l'homme du métier selon ses connaissances pour obtenir, par exemple, une épaisseur moyenne de la couche d'ancrage 16 entre 8 et 12 microns. Afin de garantir une bonne adhérence du cuivre sur la surface dépassivée 14a, on utilise de préférence du cuivre mat, sans additif afin d'éviter toute dégradation à haute température, notamment sans additifs de type brillanteurs organiques qui, en se décomposant à haute température, formeraient des cloques entre le substrat et le revêtement autolubrifiant. Des tests d'arrachement réalisés par les inventeurs selon la norme ISO 2409 ont montré une adhérence satisfaisante de la couche d'ancrage 16 sur la surface dépassivée 14a, la couche d'ancrage 16 étant véritablement ancrée sur la surface dépassivée 14a.

Après le dépôt de la couche d'ancrage 16, on dépose un revêtement autolubrifiant sur la couche d'ancrage 16. Pour ce faire, selon l'invention, on dépose tout d'abord une couche poreuse 18 sur la couche d'ancrage 16.

En l'espèce, la couche poreuse 18 est obtenue par frittage d'une poudre, et plus particulièrement d'une poudre de bronze. La poudre de bronze, ici de formule chimique CuSn₁₂, peut être frittée par épandage dans un four de frittage à tapis. La vitesse de défilement du tapis peut être comprise entre 8 et 12 mètres par heure. La température du four peut être comprise entre 700°C et 900°C. On obtient ainsi une couche poreuse 18 frittée présentant un taux de porosité compris entre 15% et 30%, comme illustré sur la figure 1D. L'épaisseur de la couche poreuse 18 peut être comprise entre 0,2 et 2 millimètres, de préférence entre 0,5 et 1 millimètre, selon l'application.

Le frittage du bronze CuSn₁₂ sur la couche d'ancrage 16 en cuivre est un frittage homogène, qui assure par conséquent une bonne adhérence et une qualité d'interface optimale entre la couche d'ancrage 16 et la couche poreuse 18. Par suite, la couche poreuse 18 de bronze présente une adhérence métallurgique avec le substrat 12 via la couche d'ancrage 16 en cuivre, ce qui supprime tout risque de décollement.

La couche poreuse 18 est ensuite imprégnée de façon à former un revêtement autolubrifiant, par exemple par trempage. Dans ce mode de réalisation, on trempe l'ensemble solidaire formé par le substrat 12, la couche d'ancrage 16 et la couche poreuse 18 dans un bain. Le bain peut comprendre une solution aqueuse de polytétrafluoroéthylène (PTFE). Une pénétration homogène et totale de la solution dans toute l'épaisseur de la couche poreuse 18 peut être obtenue, selon un exemple, en réalisant le trempage dans une chambre à vide et en faisant alterner la pression dans ladite chambre entre le vide et la pression atmosphérique, afin de chasser l'air présent dans les porosités de la couche poreuse 18. A l'issue de cette imprégnation, la couche poreuse 18 imprégnée forme un revêtement autolubrifiant 20, comme illustré sur la figure 1E.

On procède également à une mise en forme de la bague. Par exemple, comme indiqué précédemment, le substrat 12 peut être découpé aux dimensions souhaitées, selon le diamètre et la largeur visées, et enroulé de sorte que ses extrémités opposées soient en contact. L'enroulement peut être réalisé par formage sous presse. Pour assurer la continuité de la bague, lesdites extrémités peuvent ensuite être soudées entre elles , ou simplement mises bout à bout par frettage dans un support dont le diamètre interne est dimensionné de façon à maintenir lesdites extrémités en contact, sans jeu. Une bague autolubrifiante 10 est ainsi obtenue, comme représentée sur la figure 2.

En plus des étapes précédemment décrites, il est possible d'appliquer un traitement thermique au substrat 12 recouvert de la couche d'ancrage 16 et de la couche poreuse 18. Un tel traitement thermique peut améliorer l'interdiffusion entre les couches et, *in fine,* l'adhérence du revêtement autolubrifiant 20 sur le substrat 12. Toutefois, si la température sélectionnée est trop haute, un tel traitement peut dégrader les propriétés mécaniques du substrat 12.

Bien que la présente invention ait été décrite en se référant à des exemples de réalisation spécifiques, des modifications peuvent être apportées à ces exemples sans sortir de la portée générale de l'invention telle que définie par les revendications. En outre, des caractéristiques individuelles des différents modes de réalisation illustrés/mentionnés peuvent être combinées dans des modes de réalisation additionnels, tout en restant dans le cadre de la portée des revendications. Par conséquent, la description et les dessins doivent être considérés dans un sens illustratif plutôt que restrictif.

## Revendications

1. Procédé de fabrication d'une bague autolubrifiante (10) pour palier fluide, comprenant les étapes suivantes :
- fournir un substrat (12) en alliage présentant une couche passive (14) ;
- retirer au moins en partie la couche passive (14) dudit substrat, de façon à obtenir une surface dépassivée (14a) ;
- déposer une couche d'ancrage (16) sur la surface dépassivée (14a) ;
- déposer un revêtement autolubrifiant (20) sur la couche d'ancrage (16), le revêtement comprenant une couche poreuse (18) présentant une adhérence métallurgique avec le substrat (12) via la couche d'ancrage (16).

2. Procédé de fabrication selon la revendication 1, dans lequel le substrat (12) est en alliage à base nickel, de préférence dans lequel la composition du substrat (12) est la suivante, exprimée en pourcentages massiques : 20,0 à 23,0% de Cr ; au maximum 5,0% de Fe ; 8,0 à 10,0% de Mo ; 3,15 à 4,15% de Nb ; au maximum 1,0% de Co ; au maximum 0,50% de Mn ; au maximum 0,40% de Al ; au maximum 0,40% de Ti ; au maximum 0,50% de Si ; au maximum 0,10% de C ; au maximum 0,015% de S ; au maximum 0,015% de P ; la balance étant Ni.

3. Procédé de fabrication selon la revendication 1 ou 2, dans lequel le retrait de la couche passive (14) comprend un sablage du substrat (12).

4. Procédé de fabrication selon l'une quelconque des revendications 1 à 3, dans lequel le dépôt de la couche d'ancrage (16) est réalisé par voie électrolytique.

5. Procédé de fabrication selon l'une quelconque des revendications 1 à 4, dans lequel l'épaisseur de la couche d'ancrage (16) est comprise entre 2 et 20 microns, de préférence entre 5 et 15 microns, de préférence encore entre 8 et 12 microns.

6. Procédé de fabrication selon l'une quelconques des revendications 1 à 5, dans lequel le dépôt du revêtement autolubrifiant (20) comprend un frittage.

7. Procédé de fabrication selon l'une quelconque des revendications 1 à 6, dans lequel la couche d'ancrage (16) est faite de cuivre.

8. Procédé de fabrication selon l'une quelconque des revendications 1 à 7, dans lequel le substrat (12) est enroulé pour former la bague.

9. Procédé de fabrication selon l'une quelconque des revendications 1 à 8, dans lequel le substrat (12) forme un dos pour la bague (10).

10. Procédé de fabrication selon l'une quelconque des revendications 1 à 9, dans lequel le substrat (12) est enroulé avec la couche d'ancrage (16) et le revêtement autolubrifiant (20) déposés dessus.

11. Procédé de fabrication selon l'une quelconque des revendications 1 à 10, dans lequel la couche d'ancrage (16) est en alliage à base cuivre ou en nickel.

12. Procédé de fabrication selon l'une quelconque des revendications 1 à 11, dans lequel la couche d'ancrage (16) est en cuivre et la couche poreuse est en bronze.

13. Bague autolubrifiante (10) pour palier fluide, comprenant un substrat (12) en alliage configuré pour présenter une couche passive, la bague comprenant en outre une couche d'ancrage (16) ancrée sur ledit substrat (12) dont la couche passive a été retirée, et un revêtement autolubrifiant (20) déposé sur la couche d'ancrage (16), le revêtement (20) comprenant une couche poreuse (18) présentant une adhérence métallurgique avec le substrat (12) via la couche d'ancrage (16).

## Patentansprüche

1. Herstellungsverfahren eines selbstschmierenden Rings (10) für ein Fluidlager, umfassend die folgenden Schritte:
- Bereitstellen eines Substrats (12) aus Legierung, das eine Passivschicht (14) aufweist;
- zumindest teilweises Entfernen der Passivschicht (14) von dem Substrat, um eine depassivierte Oberfläche (14a) zu erlangen;
- Aufbringen einer Ankerschicht (16) auf die depassivierte Oberfläche (14a);
- Aufbringen einer selbstschmierenden Beschichtung (20) auf die Ankerschicht (16), die Beschichtung umfassend eine poröse Schicht (18), die über die Ankerschicht (16) eine metallurgische Haftung an dem Substrat (12) aufweist.

2. Herstellungsverfahren nach Anspruch 1, wobei das Substrat (12) aus einer Legierung auf Nickelbasis ist, vorzugsweise wobei die Zusammensetzung des Substrats (12) die folgende ist, ausgedrückt in Massenprozent: 20,0 bis 23,0 % Cr; höchstens 5,0 % Fe; 8,0 bis 10,0 % Mo; 3,15 bis 4,15 % Nb; höchstens 1,0 % Co; höchstens 0,50 % Mn; höchstens 0,40 % Al; höchstens 0,40 % Ti; höchstens 0,50 % Si; höchstens 0,10 % C; höchstens 0,015 % S; höchstens 0,015 % P; wobei der Rest Ni ist.

3. Herstellungsverfahren nach Anspruch 1 oder 2, wobei das Entfernen der Passivschicht (14) ein Sandstrahlen des Substrats (12) umfasst.

4. Herstellungsverfahren nach einem der Ansprüche 1 bis 3, wobei die Abscheidung der Ankerschicht (16) auf elektrolytischem Wege erfolgt.

5. Herstellungsverfahren nach einem der Ansprüche 1 bis 4, wobei die Stärke der Ankerschicht (16) zwischen 2 und 20 Mikrometern, vorzugsweise zwischen 5 und 15 Mikrometern, bevorzugter zwischen 8 und 12 Mikrometern liegt.

6. Herstellungsverfahren nach einem beliebigen der Ansprüche 1 bis 5, wobei die Abscheidung der selbstschmierenden Beschichtung (20) ein Sintern umfasst.

7. Herstellungsverfahren nach einem der Ansprüche 1 bis 6, wobei die Ankerschicht (16) aus Kupfer gefertigt ist.

8. Herstellungsverfahren nach einem der Ansprüche 1 bis 7, wobei das Substrat (12) gewickelt wird, um den Ring zu bilden.

9. Herstellungsverfahren nach einem der Ansprüche 1 bis 8, wobei das Substrat (12) einen Rücken für den Ring (10) bildet.

10. Herstellungsverfahren nach einem der Ansprüche 1 bis 9, wobei das Substrat (12) mit der darauf aufgebrachten Ankerschicht (16) und der selbstschmierenden Beschichtung (20) gewickelt wird.

11. Herstellungsverfahren nach einem der Ansprüche 1 bis 10, wobei die Ankerschicht (16) aus Legierung auf Kupferbasis oder aus Nickel ist.

12. Herstellungsverfahren nach einem der Ansprüche 1 bis 11, wobei die Ankerschicht (16) aus Kupfer ist und die poröse Schicht aus Bronze ist.

13. Selbstschmierender Ring (10) für ein Fluidlager, umfassend ein Substrat (12) aus Legierung, das konfiguriert ist, um eine Passivschicht aufzuweisen, der Ring ferner umfassend eine Ankerschicht (16), die auf dem Substrat (12) verankert ist, von dem die Passivschicht entfernt wurde, und eine selbstschmierende Beschichtung (20), die auf die Ankerschicht (16) aufgebracht ist, die Beschichtung (20) umfassend eine poröse Schicht (18), die über die Ankerschicht (16) eine metallurgische Haftung an dem Substrat (12) aufweist.

## Claims

1. A method of manufacturing a self-lubricating ring (10) for a fluid bearing, comprising the following steps:
- providing an alloy substrate (12) having a passive layer (14);
- at least partially removing the passive layer (14) of said substrate, so as to obtain a depassivated surface (14a);
- depositing an anchoring layer (16) on the depassivated surface (14a);
- depositing a self-lubricating coating (20) on the anchoring layer (16), the coating comprising a porous layer (18) having a metallurgical adherence with the substrate (12) via the anchoring layer.

2. The manufacturing method according to claim 1, wherein the substrate (12) is made from a nickel-based alloy, preferably wherein the composition of the substrate (12) is as follows, expressed in percentages by weight: 20.0 to 23.0% Cr; not more than 5.0% Fe; 8.0 to 10.0% Mo; 3.15 to 4.15% Nb; not more than 1.0% Co; not more than 0.50% Mn; not more than 0.40% Al; not more than 0.40% Ti; not more than 0.50% Si; not more than 0.10% C; not more than 0.015% S; not more than 0.015% P; the balance being Ni.

3. The manufacturing method according to claim 1 or 2, wherein the removal of the passive layer (14) comprises sanding the substrate (12).

4. The manufacturing method according to any one of claims 1 to 3, wherein the deposition of the anchoring layer (16) is performed electrolytically.

5. The manufacturing method according to any one of claims 1 to 4, wherein the thickness of the anchoring layer (16) is between 2 and 20 microns, preferably between 5 and 15 microns, more preferably between 8 and 12 microns.

6. The manufacturing method according to any one of claims 1 to 5, wherein depositing the self-lubricating coating (20) comprises sintering.

7. The manufacturing method according to any one of claims 1 to 6, wherein the anchoring layer (16) is made of copper.

8. The manufacturing method according to any one of claims 1 to 7, wherein the substrate (12) is wound to form the ring.

9. The manufacturing method according to any one of claims 1 to 8, wherein the substrate (12) forms a back for the ring (10).

10. The manufacturing method according to any one of claims 1 to 9, wherein the substrate (12) is wound with the anchoring layer (16) and the self-lubricating coating (20) deposited on top.

11. The manufacturing method according to any one of claims 1 to 10, wherein the anchoring layer (16) is made from a copper-based alloy or from nickel.

12. The manufacturing method according to any one of claims 1 to 11, wherein the anchoring layer (16) is made from copper and the porous layer is made from bronze.

13. A self-lubricating ring (10) for a fluid bearing, comprising an alloy substrate (12) configured to have a passive layer, the ring further comprising an anchoring layer (16) anchored to said substrate (12) whereof the passive layer has been removed, and a self-lubricating coating (20) deposited on the anchoring layer (16), the coating (20) comprising a porous layer (18) having a metallurgical adherence with the substrate (12) via the anchoring layer (16).
